# EUROPEAN PATENT APPLICATION

(11) **EP 4 586 337 A1**
(43) Date of publication of application: **16.07.2025**
(21) Application number: 24873856.9
(22) Date of filing: 30.09.2024
(51) Int. Cl.: H01M 4/36, H01M 4/525, H01M 4/505, H01M 4/131, H01M 10/0562, H01M 4/62, H01M 10/052, H01M 4/02

(54) **CATHODE ACTIVE MATERIAL FOR ALL-SOLID-STATE BATTERY, CATHODE, AND ALL-SOLID-STATE BATTERY**

(30) Priority: 23.10.2023 KR 20230141761
(71) Applicant: LG Energy Solution Ltd., 07335 Seoul (KR)
(72) Inventor: KANG, Sora, Daejeon 34122 (KR); KIM, Myeongsoo, Daejeon 34122 (KR); KWON, Hyejin, Daejeon 34122 (KR); LEE, Choonghyeon, Daejeon 34122 (KR); CHOI, Seokin, Daejeon 34122 (KR); OH, Kyungbac, Daejeon 34122 (KR)
(74) Representative: Goddar, Heinz J.
(86) International application number: PCT/KR2024/014842
(87) International publication number: WO 2025/089653

(57) **Abstract**

The present disclosure relates to a positive electrode active material for an all-solid-state battery, a positive electrode, and an all-solid-state battery comprising same. More specifically, the positive electrode active material according to the present disclosure has a particle layer coated with lithium titanium oxide particles on its surface, wherein the particle layer prevents side reactions between the positive electrode active material and the sulfide-based solid electrolyte particles in the positive electrode, thereby enabling the all-solid-state battery to be stably charged and discharged.

## Description

### [Technical Field]

This application claims the benefit of priority to Korean Patent Application No. 10-2023-0141761, filed October 23, 2023, the disclosures of which are incorporated herein by reference in their entirety.

The present disclosure relates to a positive electrode active material for an all-solid-state battery, a positive electrode, and an all-solid-state battery comprising same.

### [Related Art]

A variety of batteries are being researched to overcome the limitations of current lithium secondary batteries in terms of capacity, safety, output, enlargement, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. In addition, among all-solid-state batteries, technology development is continuing for sulfide-based all-solid-state batteries, which have a high ionic conductivity of solid electrolyte and can realize a high energy density of at least 900 Wh/L in theory. A sulfide-based all-solid-state battery refers to an all-solid-state battery containing a sulfide-based solid electrolyte.

In an all-solid-state battery system, lithium ions are not conducted by the liquid electrolyte contained in a conventional lithium-ion battery (LIB). Therefore, when manufacturing a positive electrode for sulfide-based all-solid-state batteries, it is necessary to increase the contact interface between the positive electrode active material and the sulfide-based solid electrolyte particles by adding sulfide-based solid electrolyte particles inside the positive electrode to increase the conductivity of lithium ions. In addition, to improve energy density, the physical contact between the positive electrode active material, sulfide-based solid electrolyte particles, and other cell elements in the positive electrode must be enhanced, and the porosity of the positive electrode must be reduced after rolling, which must be maintained during charge and discharge.

However, in a positive electrode for a sulfide-based all-solid-state battery, chemical reactions can occur only by physical contact between the positive electrode active material and the sulfide-based solid electrolyte particles due to the difference in their levels. In addition, side reactions occur at the interface of the positive electrode active material and the sulfide-based solid electrolyte particles, which not only consume the active lithium but also increase the resistance.

Therefore, there is a steady need to develop technologies that can prevent side reactions caused by physical contact between the positive electrode active material and the sulfide-based solid electrolyte particles at the positive electrode of a sulfide-based all-solid-state battery.

### [Prior Art Reference]

(Patent Reference 1) Japanese Patent Publication No. 2009-224307

### [Detailed Description of the Invention]

### [Technical Problem]

The inventors of the present disclosure have conducted multifaceted research to solve the above problems, and have confirmed that the Li₄Ti₅O₁₂ particles are coated on the surface of the positive electrode active material to form a Li₄Ti₅O₁₂ particle layer, and that the Li₄Ti₅O₁₂ particle layer can prevent side reactions between the positive electrode active material and the sulfide-based solid electrolyte particles during physical contact of the positive electrode active material and the sulfide-based solid electrolyte particles in the positive electrode, thereby enabling stable charge and discharge.

Accordingly, it is an object of the present disclosure to provide a positive electrode active material having a particle layer formed on its surface, which prevents side reactions upon physical contact with sulfide-based solid electrolyte particles.

Another object of the present disclosure is to provide a positive electrode comprising a positive electrode active material having a particle layer formed on its surface, which prevents side reactions upon physical contact with sulfide-based solid electrolyte particles.

It is another object of the present disclosure to provide an all-solid-state battery capable of stable charge and discharge, including a positive electrode active material having a particle layer formed on its surface, which prevents side reactions upon physical contact with sulfide-based solid electrolyte particles.

### [Technical Solution]

To achieve the above objectives, the present disclosure provides a positive electrode active material for an all-solid-state battery comprising a lithium titanium oxide particle layer on the surface, wherein in the lithium titanium oxide particle layer, the plurality of lithium titanium oxide particles are formed continuously or discontinuously on the surface of the positive electrode active material.

The present disclosure also provides a positive electrode active material for an all-solid-state battery, wherein the lithium titanium oxide is represented by Formula 1 below:

<Formula 1> LiₓTi_{y}O_{z}

wherein 0.5 ≤ x ≤ 5, 1 ≤ y ≤ 5, and 2 ≤ z ≤ 12.

The present disclosure also provides a positive electrode active material for an all-solid-state battery, wherein a shape of the particles is at least one selected from the group consisting of spherical and polygonal shapes.

The present disclosure also provides a positive electrode active material for an all-solid-state battery, wherein the lithium titanium oxide particles have a particle size of 10 nm to 1 µm.

The present disclosure also provides a positive electrode active material for an all-solid-state battery, wherein the lithium titanium oxide particles comprise no more than 5% by weight, based on the total weight of the positive electrode active material.

The present disclosure also provides a positive electrode active material for an all-solid-state battery, wherein a BET specific surface area of the positive electrode active material for an all-solid-state battery is 0.4 to 1 m²/g.

The present disclosure also provides a positive electrode active material for an all-solid-state battery, wherein the positive electrode active material comprises at least one selected from the group consisting of lithium cobalt oxide, lithium nickel oxide, lithium manganese oxide, lithium copper oxide, and vanadium oxide.

The present disclosure also provides a positive electrode for an all-solid-state battery comprising the positive electrode active material, sulfide-based solid electrolyte particles, a conductive material, and a binder.

The present disclosure also provides a positive electrode for an all-solid-state battery, wherein the sulfide-based solid electrolyte is represented by Formula 2 below:

<Formula 2> LₐM_{b}P_{c}S_{d}Xₑ

wherein L is an element selected from the group of alkali metals,
M is an element selected from the group consisting of B, Al, Ga, In, Si, Ge, Sn, Pb, As, Sb, Bi, Ti, V, Mn, Fe, Co, Ni, Cu, Y, Zr, Nb, Mo, Tc, Ru, Rh, Pd, Ag, Hf, Ta, and W,
X is an element selected from the group consisting of F, Cl, Br, I, and O; and
0≤a≤12, 0≤b≤6, 0≤c≤6, 0<d≤12, and 0≤e≤9.

The present disclosure also provides a positive electrode for an all-solid-state battery, wherein the conductive material comprises at least one type selected from the group consisting of vapor-grown carbon fiber (VGCF), graphite, carbon black, carbon fluoride, metal powder, conductive whisker, conductive metal oxide, and conductive polymer.

The disclosure further provides a positive electrode for an all-solid-state battery, wherein the binder comprises at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

The present disclosure also provides an all-solid-state battery comprising the positive electrode, a negative electrode, and a solid electrolyte film interposed therebetween.

### [Advantageous Effects]

According to the positive electrode active material for an all-solid-state battery of the present disclosure, due to a lithium titanium oxide particle layer formed on the positive electrode active material, damage to the positive electrode active material can be prevented, and side reactions between the positive electrode active material and sulfide-based solid electrolyte particles in the positive electrode can be prevented.

Furthermore, an all-solid-state battery comprising a positive electrode active material in which the lithium titanium oxide particle layer is formed is capable of stable charge and discharge as side reactions between the positive electrode active material and sulfide-based solid electrolyte particles are prevented.

### [Brief Description of Drawing]

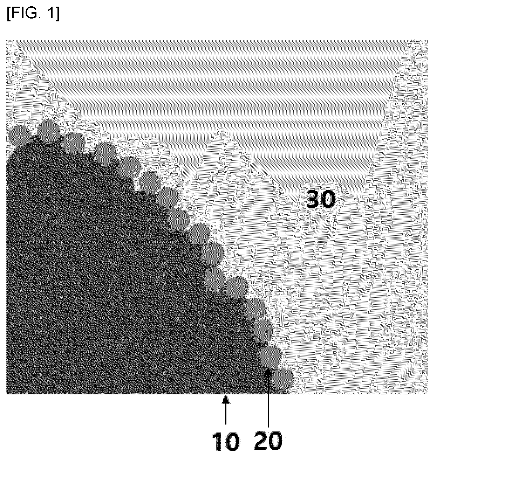

FIG. 1 illustrates a partial cross-sectional view of a positive electrode active material for an all-solid-state battery according to one example of the embodiment of the invention.

### [Best Mode]

Hereinafter, the present disclosure will be described in more detail to provide a better understanding.

The terms and words used in this specification and claims are not to be construed in their ordinary or dictionary sense, but rather in a sense and concept consistent with the technical idea of the present disclosure, based on the principle that the inventor may define the concept of a term as he/her sees fit to best describe his/her invention.

### Positive electrode active material for all-solid-state battery

The present disclosure relates to a positive electrode active material for an all-solid-state battery.

A positive electrode active material for an all-solid-state battery according to the present disclosure, comprises a lithium titanium oxide particle layer on its surface, wherein the lithium titanium oxide particle layer has a shape in which a plurality of lithium titanium oxide particles are formed continuously or discontinuously on the surface of the positive electrode active material.

FIG. 1 illustrates a partial cross-sectional view of a positive electrode active material for an all-solid-state battery according to one example of the present disclosure.

Referring to FIG. 1, a lithium titanium oxide particle layer (20) is formed on the surface of the positive electrode active material (10). When applied to the positive electrode and present with the sulfide-based solid electrolyte particles (30), the lithium titanium oxide particle layer (20) can act as a buffer layer, preventing side reactions between them.

The lithium titanium oxide particle layer (20) may be prepared by a dry process without any solvent, and the lithium titanium oxide particles within the coating layer may be contained in particulate form. Accordingly, the surface of the lithium titanium oxide particle layer (20) may have a continuous or discontinuous connected shape of particles. The particles are small objects with physical and chemical properties.

The particles may be one or more selected from the group consisting of spherical and polygonal shapes.

The polygon may be one or more selected from the group consisting of triangles, squares, pentagons, hexagons, heptagons, octagons, and octagons.

Thus, the surface of the lithium titanium oxide particle layer may be shaped with curved portions having the shape of a portion of a sphere and/or polygonal portions having the shape of a portion of a polygon, connected continuously and/or discontinuously.

In one example of the present disclosure, the lithium titanium oxide (LTO) may be represented by Formula 1 below:

<Formula 1> LiₓTi_{y}O_{z}

wherein 0.5 ≤ x ≤ 5, 1 ≤ y ≤ 5, and 2 ≤ z ≤ 12.

Furthermore, in terms of electrochemical stability, the lithium titanium oxide may preferably be Li₄Ti₅O₁₂.

In one example of the present disclosure, the lithium titanium oxide particles may have a particle size of 10 nm to 1 µm.

Specifically, the lithium titanium oxide particles may have a particle size of 10 nm or more, 30 nm or more, or 50 nm or more, and may be 0.5 µm or less, 0.8 µm or less, or 1 µm or less. If the particle size is less than 10 nm, the interfacial resistance may increase or the dispersibility may decrease, and if it is greater than 1 µm, the coverage of the coating layer may decrease.

In one example of the present disclosure, the lithium titanium oxide particles may be comprised in an amount of no more than 5% by weight based on the total weight of the positive electrode active material. In this case, the total weight of the positive electrode active material refers to the total weight of the positive electrode active material in which the lithium titanium oxide particle layer is formed.

Specifically, the content of the lithium titanium oxide particles may be 5% by weight or less, 4% by weight or less, 3% by weight or less, 2% by weight or less, or 1% by weight or less. When the content of the lithium titanium oxide particles exceeds 5% by weight, the charge transfer resistance occurring between the positive electrode and the sulfide-based solid electrolyte particles may be increased. Furthermore, the lower limit of the content of the lithium titanium oxide particles is not particularly limited and may be, for example, 0.1% by weight.

In one example of the present disclosure, when the lithium titanium oxide particle layer is formed, the BET specific surface area of the positive electrode active material for an all-solid-state battery may be 0.4 to 1 m²/g.

Specifically, the BET specific surface area of the positive electrode active material for an all-solid-state battery may be 0.4 m²/g or more, 0.5 m²/g or more, or 0.6 m²/g or more, and may be 1 m²/g or less, 0.9 m²/g or less, 0.8 m²/g or less, or 0.7 m²/g or less. If the BET specific surface area of the positive electrode active material for an all-solid-state battery is below the above ranges, the effect of preventing side reactions between the positive electrode active material and the sulfide-based solid electrolyte particles in the positive electrode may be reduced, and if it exceeds the above range, it may act as a resistance when the battery is driven.

In one example of the present disclosure, the positive electrode active material may be any material capable of reversibly adsorbing and releasing lithium ions, without being particularly limited thereto, for example, a layered compound such as lithium cobalt oxide (LiCoO₂), lithium nickel oxide (LiNiO₂), Li[NiₓCo_{y}Mn_{z}Mᵥ]O₂ (wherein M is any one or two or more elements selected from the group consisting of Al, Ga and In; and 0.3≤x<1.0, 0≤y, z≤0.5, 0≤v≤0.1, and x+y+z+v=1), Li(LiₐM_{b-a-b'}M'_{b'})O_{2-c}A_{c} (wherein 0≤a≤0.2, 0.6≤b≤1, 0≤b'≤0.2, and 0≤c≤0.2; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula Li_{1+y}Mn_{2-y}O₄ (wherein y is 0 to 0.33), LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; a Ni site-type lithium nickel oxide represented by formula LiNi_{1-y}MyO₂ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or Li₂Mn₃MO₈ (wherein M is Fe, Co, Ni, Cu, or Zn); LiMn₂O₄, in which a portion of the Li in the formula is substituted by an alkaline earth metal ion; a disulfide compound; Fe₂(MoO₄)₃; and the like, but not limited thereto.

In the positive electrode active material for an all-solid-state battery as described above, damage to the positive electrode active material can be prevented due to the lithium titanium oxide particle layer formed on the surface.

Furthermore, when the positive electrode active material having the lithium titanium oxide particle layer is applied to the positive electrode of an all-solid-state battery, side reactions with the sulfide-based solid electrolyte particles contained in the positive electrode can be prevented. In other words, the lithium titanium oxide particle layer can act as a buffer layer between the positive electrode active material and the sulfide-based solid electrolyte particles to prevent side reactions, thereby enabling the stable charge and discharge of the all-solid-state battery.

Furthermore, even if the surface of the positive electrode active material is coated with the lithium titanium oxide particles, the bulk structure of the positive electrode active material remains unchanged, so that stable electrochemical performance can be realized. In general, problems during the positive electrode active material coating process can change the bulk structure of the positive electrode active material. For example, the bulk structure may turn into a rock salt structure, in which case the mobility of lithium in the positive electrode active material may be reduced, but in the present disclosure, the bulk structure of the positive electrode active material may remain stable even when coated with the lithium titanium oxide particles.

Furthermore, in the present disclosure, there is no problem of particles falling off from the lithium titanium oxide particle layer, which can improve the reliability of the product.

### Method for producing a positive electrode active material for all-solid-state battery

The present disclosure also relates to a method of preparing a positive electrode active material for an all-solid-state battery.

A method for preparing a positive electrode active material for an all-solid-state battery according to the present disclosure, comprises: (S1) mixing a positive electrode active material and lithium titanium oxide particles; and (S2) heating and then cooling the mixture.

The method may be carried out by a dry process without the use of a solvent, or by a wet process in which the particles are dispersed in a solvent and then mixed in step (S1).

Hereinafter, a method of manufacturing a positive electrode active material for an all-solid-state battery according to the present disclosure will be described in more detail by each step.

In one example of the present disclosure, in step (S1) above, the positive electrode active material and the lithium titanium oxide particles may be mixed.

The type and content of the positive electrode active material and the lithium titanium oxide particles are as described above.

Additionally, the lithium titanium oxide particles may be dispersed in a solvent and then mixed. In this case, the solvent is not particularly limited as long as it is a solvent in which the lithium titanium oxide particles can be stably dispersed. For example, the solvent may be any solvent commonly used in the art, such as dimethyl sulfoxide (DMSO), isopropyl alcohol, N-methyl-2-pyrrolidone (NMP), acetone, or water, and one selected therefrom or a mixture of two or more therefrom may be used.

In one example of the present disclosure, in step (S2) above, the mixture may be heated and then cooled to coat the surface of the positive electrode active material with lithium titanium oxide particles.

The heating temperature may be 150°C to 300°C. If the heating temperature is below 150°C, the adhesion between the lithium titanium oxide particles and the adhesion of the lithium titanium oxide particles to the surface of the positive electrode active material may be degraded, and if the heating temperature is above 300°C, the lithium on the surface of the positive electrode active material may be deintercalated by the high temperature heat treatment. Specifically, the heating temperature may be 150°C or higher, 160°C or higher, 170°C or higher, or 180°C or higher, 220°C or lower, 240°C or lower, 260°C or lower, 280°C or lower, or 300°C or lower.

In addition, cooling the heated lithium titanium oxide particle layer can further improve the adhesion of the lithium titanium oxide particle layer and strengthen the durability of the positive electrode active material itself. For example, the cooling temperature may be 10 to 30°C.

### Positive electrode for all-solid-state battery

The present disclosure relates to a positive electrode for an all-solid-state battery.

A positive electrode for an all-solid-state battery according to the present disclosure includes a positive electrode active material, sulfide-based solid electrolyte particles, a binder, and a conductive material.

In one example of the present disclosure, the positive electrode may be in a current collector-free form. In this case, the positive electrode active material layer comprising the positive electrode active material, sulfide-based solid electrolyte particles, binder and conductive material may itself be the positive electrode.

Further, the positive electrode may comprise a positive electrode current collector and a positive electrode active material layer formed on one side of the positive electrode current collector. The positive electrode active material layer may comprise the positive electrode active material, sulfide-based solid electrolyte particles, a conductive material, and a binder.

The positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, stainless steel, aluminum, nickel, titanium, palladium, calcined carbon, stainless steel whose surface is treated with carbon, nickel, or silver, aluminum-cadmium alloy, and the like may be used as the positive electrode current collector.

The positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

In one example of the present disclosure, the positive electrode active material is a positive electrode active material having a lithium titanium oxide particle layer formed on its surface as described above.

The positive electrode active material is as described above.

Further, the positive electrode active material may be included in an amount of 55 to 90% by weight based on the total weight of the positive electrode active material layer. Specifically, the content of the positive electrode active material may be 55% by weight, 60% by weight or more, or 65% by weight or more, 83% by weight or less, 85% by weight or less, or 90% by weight or less. If the content of the positive electrode active material is less than 55% by weight, the battery performance may be reduced, and if the content is greater than 90% by weight, the mass transfer resistance may be increased.

In one example of the present disclosure, the sulfide-based solid electrolyte particles may be included in the positive electrode to improve ionic conductivity.

The sulfide-based solid electrolyte may be represented by Formula 2 below:

<Formula 2> LₐM_{b}P_{c}S_{d}Xₑ

wherein L is an element selected from the group of alkali metals,
M is an element selected from the group consisting of B, Al, Ga, In, Si, Ge, Sn, Pb, As, Sb, Bi, Ti, V, Mn, Fe, Co, Ni, Cu, Y, Zr, Nb, Mo, Tc, Ru, Rh, Pd, Ag, Hf, Ta, and W,
X is an element selected from the group consisting of F, Cl, Br, I, and O; and
0≤a≤12, 0≤b≤6, 0≤c≤6, 0<d≤12, and 0≤e≤9.

For example, the sulfide-based solid electrolyte may comprise at least one selected from the group consisting of Li₆PS₅Cl, Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers and Z is one of Ge, Zn, and Ga), Li₂S-GeS₂, Li₂S-SiS₂-Li₃PO₄, Li₂S-SiS₂-LiₓMO_{y} (wherein x and y are positive numbers and M is one of P, Si, Ge, B, Al, Ga, and In), and Li₁₀GeP₂S₁₂.

Further, the sulfide-based solid electrolyte particles may be included in an amount of 10 to 50% by weight based on the total weight of the positive electrode active material layer. Specifically, the content of the sulfide-based solid electrolyte may be 10% by weight or more, 20% by weight or more, or 30% by weight or more, and may be 40% by weight or less, 45% by weight or less, or 50% by weight or less. If the content of the sulfide-based solid electrolyte particles is less than 10% by weight, the ionic conductivity enhancement effect may be insignificant, and if it is more than 50% by weight, the content of the positive electrode active material, binder or conductive material may be relatively reduced, resulting in a decrease in battery performance.

In one example of the present disclosure, the binder may be included to facilitate bonding between the materials contained in the positive electrode active material layer and bonding between the positive electrode active material layer and the positive electrode current collector.

The binder may comprise at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be included in an amount of 0.1 to 3% by weight based on the total weight of the positive electrode active material layer. Specifically, the content of the binder may be 0.1% by weight or more, 0.5% by weight or more, 0.8% by weight or more, or may be 1.5% by weight or less, 2% by weight or less, or 3% by weight or less. If the content of the binder is less than 0.1% by weight, the effect of improving the cohesion between the materials contained in the positive electrode active material layer is minimal and the electrode sheet may not be formed properly, and if the content is greater than 3% by weight, the ionic conductivity or electrical conductivity may be reduced.

In one example of the present disclosure, the conductive material may be included in the positive electrode to improve ionic conductivity.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskers, such as zinc oxide, potassium titanate, etc.; conductive metal oxides, such as titanium oxide; and conductive polymers, such as polyphenylene derivatives; can be used alone or in a mixture of two or more of the foregoing, but are not necessarily limited thereto. Preferably, the conductive material may comprise vapor-grown carbon fiber (VGCF).

The conductive material may be included in an amount of 0.1% by weight to 5% by weight based on the total weight of the positive electrode active material layer, and more specifically, the content of the conductive material may be 0.1% by weight or more, 0.5% by weight or more, 1% by weight or more, 1.5% by weight or more, 2% by weight or more, 4% by weight or less, 4.5% by weight or less, or 5% by weight or less. If the content of the conductive material is too small, less than 0.1% by weight, it is difficult to expect the effect of improving the electrical conductivity or the electrochemical properties of the battery may be degraded, and if it is too large, exceeding 5% by weight, the amount of positive electrode active material is relatively small, resulting in a decrease in capacity and energy density.

### All-solid-state battery

The present disclosure relates to an all-solid-state battery comprising the solid electrolyte film.

An all-solid-state battery according to the present disclosure includes the positive electrode, the negative electrode, and a sulfide-based solid electrolyte film interposed therebetween. The positive electrode is as described above.

In one example of the present disclosure, the negative electrode comprises a negative electrode active material layer, wherein the negative electrode active material layer may be formed on one side of the negative electrode current collector.

The negative electrode active material layer may comprise a negative electrode active material, a conductive material, and a binder. Alternatively, the negative electrode active material layer may be an anodeless layer.

In the negative electrode active material layer, the negative electrode active material may comprise a material capable of reversibly intercalating or deintercalating lithium (Li⁺), a material capable of reacting with lithium ions to reversibly form a lithium-containing compound, a lithium metal, or a lithium alloy.

The material into which the lithium ions (Li⁺) can be reversibly inserted or removed can be, for example, crystalline carbon, amorphous carbon, or a mixture thereof. The material capable of reacting with the lithium ions (Li⁺) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active material layer and the dry negative electrode active material layer may be insufficient, and if the content is greater than 80% by weight, the mass transfer resistance may be greater.

The binder is a component that assists in the bonding of the negative electrode active material and the conductive material or the bonding to a negative electrode current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the negative electrode active material layer, and more specifically, the content of the binder may be 0.5% by weight or more, 1% by weight or more, 1.5% by weight or more, 3% by weight or less, 3.5% by weight or less, or 4% by weight or less. If the binder content is less than 0.5% by weight, the adhesion of the positive electrode active material to the negative electrode current collector may be reduced, and if the binder content is greater than 4% by weight, the adhesion may be improved, but the content of the negative electrode active material may be reduced, resulting in a lower cell capacity.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskers, such as zinc oxide, potassium titanate, etc.; conductive oxides, such as titanium oxide; and conductive polymers, such as polyphenylene derivatives; can be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the negative electrode active material layer, and more specifically, the content of the conductive material may be 1% by weight or more, 1.5% by weight or more, 2% by weight or more, and may be 4% by weight or less, 4.5% by weight or less, or 5% by weight or less. If the content of the conductive material is too small, such as less than 1% by weight, it is difficult to expect the effect of improving the electrical conductivity or the electrochemical properties of the battery may be degraded, and if it is too large, such as more than 5% by weight, the amount of negative electrode active material may be relatively small, resulting in a decrease in capacity and energy density. The method of incorporating the conductive material into the negative electrode is not substantially limited, and any conventional method known in the art can be used, such as mixing with or coating the negative electrode active material.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the present disclosure also includes a case in which a metallic lithium thin film is formed on a metal plate by initial charging after the battery is assembled without a lithium thin film on the negative electrode current collector.

Furthermore, the anodeless layer refers to a negative electrode layer in which no lithium metal or lithium alloy that can be a source of lithium among the negative electrode active materials is present in the negative electrode at the time of initial assembly of the battery, but lithium is precipitated in the negative electrode by charging. A battery comprising the anodeless layer may be referred to as a negative electrode-free battery.

In the negative electrode-free battery, during the charging and discharging of the battery, lithium ions released from the positive electrode migrate to the negative electrode to form a negative electrode active material layer. For example, during charging of the battery, lithium ions are released from the positive electrode active material and migrate to the negative electrode side to form a lithium metal consisting purely of lithium, forming a lithium metal layer on the negative electrode current collector, or forming a lithium metal structure in any other form other than a layer form. Any other form may refer to, for example, a structure in which the lithium metal is agglomerated in the form of particles.

In one example of the present disclosure, the sulfide-based solid electrolyte included in the sulfide-based solid electrolyte layer may be represented by Formula 2 below.

<Formula 2> LₐM_{b}P_{c}S_{d}Xₑ

wherein L is an element selected from the group of alkali metals,
M is an element selected from the group consisting of B, Al, Ga, In, Si, Ge, Sn, Pb, As, Sb, Bi, Ti, V, Mn, Fe, Co, Ni, Cu, Y, Zr, Nb, Mo, Tc, Ru, Rh, Pd, Ag, Hf, Ta, and W,
X is an element selected from the group consisting of F, Cl, Br, I, and O; and
0≤a≤12, 0≤b≤6, 0≤c≤6, 0<d≤12, and 0≤e≤9.

For example, the sulfide-based solid electrolyte may comprise at least one selected from the group consisting of Li₆PS₅Cl, Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers and Z is one of Ge, Zn, and Ga), Li₂S-GeS₂, Li₂S-SiS₂-Li₃PO₄, Li₂S-SiS₂-LiₓMO_{y} (wherein x and y are positive numbers and M is one of P, Si, Ge, B, Al, Ga, and In), and Li₁₀GeP₂S₁₂.

However, the sulfide-based solid electrolyte is not limited to these, and a wide range of sulfide-based solid electrolytes conventionally used in the art may be used.

### Battery Module

The present disclosure also relates to a battery module comprising the all-solid-state battery as a unit cell, a battery pack comprising the battery module, and a device comprising the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

### [Mode for Practicing the Invention]

Hereinafter, preferred examples of the present disclosure are described for the purpose of illustrating the present disclosure, but it will be apparent to those skilled in the art that various changes and modifications are possible within the scope of the present disclosure and the technical idea, and that such changes and modifications fall within the scope of the appended patent claims.

In the following examples and comparative examples, a positive electrode active material, a positive electrode comprising same, and an all-solid-state battery were prepared as described in Table 1 below.

**[Table 1]**

| | Positive electrode active material | Lithium titanium oxide | | | Temperature (°C) | Process |
|---|---|---|---|---|---|---|
| | | Material | Weight (% by weight) | Particle size | | |
| Example 1 | LiN_{0.8}Co_{0.1}Mn_{0.1}O₂ | Li₄Ti₅O₁₂ | 1 | 50 nm | 200 | Dry |
| Example 2 | LiN_{0.8}Co_{0.1}Mn_{0.1}O₂ | Li₄Ti₅O₁₂ | 1 | 50 nm | 500 | Dry |
| Example 3 | LiN_{0.8}Co_{0.1}Mn_{0.1}O₂ | Li₄Ti₅O₁₂ | 1 | 2 µm | 200 | Dry |
| Example 4 | LiN_{0.8}Co_{0.1}Mn_{0.1}O₂ | Li₄Ti₅O₁₂ | 10 | 50 nm | 200 | Dry |

### Example 1

### 1-1. Fabrication of positive electrode active material with lithium titanium oxide particle layer on the surface

A mixture was obtained by mixing 99% by weight positive electrode active material and 1% by weight lithium titanium oxide, as described in Table 1 above. The lithium titanium oxide had a particle size of 50 nm.

The above mixture was heated to a temperature of 200°C and then cooled to coat the surface of the positive electrode active material with lithium titanium oxide particles, forming a lithium titanium oxide particle layer.

### 1-2. Preparation of a positive electrode

The positive electrode active material on which the lithium titanium oxide particle layer was formed, the sulfide-based solid electrolyte particles, the conductive material, and the binder were subjected to powder mixing in a weight ratio of 83.8 : 14.8 : 0.2 : 1.2. Specifically, the positive electrode active material and the sulfide-based solid electrolyte, Li₆PS₅Cl, were quantified in powder form and mixed for 15 minutes using a blade mixer in a dry room environment to obtain a mixture. Then, the vapor-grown carbon fiber (VGCF) powder, which is a conductive material, was quantitatively added to the mixture and mixed, and the polytetrafluoroethylene (PTFE) powder, which is a binder, was quantitatively added and further mixed to obtain a mixed powder.

After the mixed powder was introduced into the mortar, fibrosis was carried out in the mortar, and calendering was carried out in a roller to prepare a positive electrode with a loading of 6 mAh/cm².

### 1-3. All-solid-state Battery

The positive electrode, sulfide-based solid electrolyte film (Li₆PS₅Cl), and negative electrode (lithium metal) were sequentially stacked and pressurized to 100 Mpa to prepare an all-solid-state battery.

### Example 2

Except that after mixing the positive electrode active material and the lithium titanium oxide particles, the heat treatment temperature was set to 500°C, the same method was carried out as in Example 1.

### Example 3

The same method was used as in Example 1, except that the particle size of the lithium titanium oxide particles was 2 µm.

### Example 4

The same method was used as in Example 1, except that the lithium titanium oxide particles were 10% by weight.

### Experimental Example 1: Performance Evaluation of All-solid-state Batteries

The performance of the all-solid-state batteries fabricated in the examples and comparative Examples, respectively, was evaluated.

The capacity capability of the all-solid-state battery was observed using the protocol of activating the battery at 0.05C, for 2 cycles in a charger/discharger, and then discharging it up to 1C. Specifically, the rate capability was observed using a protocol of 0.05C CC/CV (Constant Current/Constant Voltage) charging, 2 cycles of 0.05C CC (Constant Current) discharging, followed by 0.1C CC/CV charging, but CC discharging at 0.1C/0.2C/0.33C/0.5C/1C.

Table 2 below shows the results of the performance evaluation of all-solid-state batteries.

**[Table 2]**

| | Charge (mAh/g) | Discharge (mAh/g) | Initial coulombic efficiency (%) | 100 cycle retention (%) | 1C retention (%) |
|---|---|---|---|---|---|
| Example 1 | 224 | 206 | 92.3 | 95.8 | 92 |
| Example 2 | 216 | 191 | 88.5 | 92 | 77 |
| Example 3 | 220 | 196 | 89.1 | 93.4 | 83 |
| Example 4 | 218 | 194 | 88.9 | 94.1 | 79 |

Referring to Table 2, it can be seen that Example 1 has superior initial coulombic efficiency, capacity retention at 100 cycle, and capacity retention at 1C retention.

On the other hand, Examples 2 to 4 all show relatively lower initial coulombic efficiency, capacity retention at 100 cycles, and capacity retention at 1C compared to Example 1.

Example 2 is heat-treated at higher temperatures, where the initial coulombic efficiency and capacity retention are relatively reduced due to the degradation of the positive electrode active material that occurs at higher temperatures.

In addition, Example 3 has a rather large particle size of the lithium titanium oxide particles, which reduces the coverage of the surface of the positive electrode active material, and the side reactions occurring at the interface of the positive electrode active material and the solid electrolyte particles are not suppressed, resulting in a relatively low initial coulombic efficiency and capacity retention.

In addition, Example 4 showed that the relatively high content of lithium titanium oxide particles resulted in excessive coverage of the positive electrode surface, resulting in poor conductivity at the interface, resulting in low initial coulombic efficiency and low capacity retention at 1C.

### [Reference Numerals]

- 10:: Positive electrode active material
- 20:: Lithium titanium oxide particle layer
- 30:: Sulfide-based solid electrolyte particles

## Claims

1. A positive electrode active material for an all-solid-state battery comprising a lithium titanium oxide particle layer on its surface,
wherein in the lithium titanium oxide particle layer, the plurality of lithium titanium oxide particles are formed continuously or discontinuously on the surface of the positive electrode active material.

2. The positive electrode active material for an all-solid-state battery according to claim 1,
wherein the lithium titanium oxide is represented by Formula 1 below:
<Formula 1> LiₓTi_{y}O_{z}
wherein 0.5 ≤ x ≤ 5, 1 ≤ y ≤ 5, and 2 ≤ z ≤ 12.

3. The positive electrode active material for an all-solid-state battery according to claim 1,
wherein a shape of the particles is at least one selected from the group consisting of spherical and polygonal shapes.

4. The positive electrode active material for an all-solid-state battery according to claim 1,
wherein the lithium titanium oxide particles have a particle size of 10 nm to 1 µm.

5. The positive electrode active material for an all-solid-state battery according to claim 1,
wherein the lithium titanium oxide particles comprise no more than 5% by weight based on the total weight of the positive electrode active material.

6. The positive electrode active material for an all-solid-state battery according to claim 1,
wherein a BET specific surface area of the positive electrode active material for an all-solid-state battery is 0.4 to 1 m²/g.

7. The positive electrode active material for an all-solid-state battery according to claim 1,
wherein the positive electrode active material comprises at least one selected from the group consisting of lithium cobalt oxide, lithium nickel oxide, lithium manganese oxide, lithium copper oxide, and vanadium oxide.

8. A positive electrode for an all-solid-state battery, comprising a positive electrode active material according to claim 1, sulfide-based solid electrolyte particles, a conductive material, and a binder.

9. The positive electrode for an all-solid-state battery according to claim 8,
wherein the sulfide-based solid electrolyte is represented by Formula 2 below:
<Formula 2> LₐM_{b}P_{c}S_{d}Xₑ
wherein L is an element selected from the group of alkali metals,
M is an element selected from the group consisting of B, Al, Ga, In, Si, Ge, Sn, Pb, As, Sb, Bi, Ti, V, Mn, Fe, Co, Ni, Cu, Y, Zr, Nb, Mo, Tc, Ru, Rh, Pd, Ag, Hf, Ta, and W,
X is an element selected from the group consisting of F, Cl, Br, I, and O; and
0≤a≤12, 0≤b≤6, 0≤c≤6, 0<d≤12, and 0≤e≤9.

10. The positive electrode for an all-solid-state battery according to claim 8,
wherein the conductive material comprises at least one type selected from the group consisting of vapor-grown carbon fiber (VGCF), graphite, carbon black, carbon fluoride, metal powder, conductive whisker, conductive metal oxide, and conductive polymer.

11. The positive electrode for an all-solid-state battery according to claim 8,
wherein the binder comprises at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

12. An all-solid-state battery comprising a positive electrode according to claim 8, a negative electrode, and a sulfide-based solid electrolyte film interposed therebetween.
